# EUROPÄISCHE PATENTSCHRIFT

(11) **EP 0 486 816 B1**
(45) Veröffentlichungstag und Bekanntmachung des Hinweises auf die Patenterteilung: **07.09.1994**
(21) Anmeldenummer: 91117718.6
(22) Anmeldetag: 17.10.1991
(51) Int. Cl.: E06B 1/60, F16B 43/00

(54) **Stapelbarer Abstandhalter zur Bestimmung des Abstands zwischen zwei zusammenpressbaren Wandungen**
Stackable shim for spacing two walls to be tightened together
Cale empilable déterminant l'écartement entre deux parois à serrer ensemble

(30) Priorität: 21.11.1990 CH 3692/90
(43) Veröffentlichungstag der Anmeldung: 27.05.1992
(73) Patentinhaber: PESTALOZZI & CO. AG, CH-8953 Dietikon (CH)
(72) Erfinder: Fuchser, Fritz, CH-6345 Neuheim (CH); Hug, Max, CH-8116 Würenlos (CH)
(74) Vertreter: EGLI-EUROPEAN PATENT ATTORNEYS

(56) Entgegenhaltungen:
- EP-A- 0 100 555
- DE-A- 1 683 374
- DE-A- 3 536 845
- FR-A- 2 607 548
- FR-A- 2 643 104
- LU-A- 56 710
- US-A- 3 608 601

## Beschreibung

Die Erfindung betrifft einen stapelbaren Abstandhalter zur Bestimmung des Abstands zwischen zueinander beanspruchten und verschiebbaren Wandungen, wobei
der Abstandhalter einen Abstandhalterkörper mit im wesentlichen ebenen und einander parallelen Seitenflächen und einem parallel zu den Seitenflächen im wesentlichen U-förmigen Querschnitt aufweist,
die Seitenflächen durch ihren Abstand voneinander eine Breite des Abstandhalterkörpers definieren,
der Abstandhalterkörper an gegenüberliegenden Stellen seiner Seitenflächen steckerseitig mit einem Vorsprung und buchsenseitig mit einer im wesentlichen zylindrischen Ausnehmung versehen ist, wobei orthogonal zu den Seitenflächen die Tiefe der Ausnehmung grösser ist als die Höhe des Vorsprungs,
und von zwei Abstandhaltern der Vorsprung des einen Abstandhalters und die Ausnehmung eines anderen Abstandhalters zusammen eine Paarung bilden, so dass der Vorsprung des einen Abstandhalters in die Ausnehmung des anderen Abstandhalters steckbar ist.

Ein solcher Abstandhalter wird beispielsweise im Bauwesen beim Einbau von Rahmen von Fenster oder Türen verwendet. Der Rahmen ist mit Befestigungsschrauben am Mauerwerk festzuhalten, wobei der Abstand zwischen den gegenüberliegenden Wandungen des Rahmens und des Mauerwerks im allgemeinen unregelmässig ist. Um die Befestigungsschrauben fest anziehen zu können, ist es nötig, zwischen die gegenüberliegenden Wandungen des Rahmens und des Mauerwerks Abstandhalter einzuschieben, die dann beim Anziehen der Befestigungsschrauben zwischen den Wandungen festgeklemmt werden. Da die Breite der Abstandhalter den jeweiligen Abstand zwischen den Wandungen bestimmt und aufrechterhält, kann man die Befestigungsschrauben fest anziehen, wodurch die Wandungen zusammengepresst werden, ohne den Rahmen zu verzerren oder zu verspannen.

Es ist dabei bekannt, den Abstandhalter im wesentlichen U-förmig zu gestalten, um ihn auf die Befestigungsschraube aufsetzen zu können. Uebrigens kann man den Abstandhalter auch auf einen Stift, Nagel oder dergleichen, allgemein ausgedrückt auf irgendeinen zwischen den Wandungen angeordneten Steg aufsetzen.

Es ist auch bekannt, im Hinblick auf die verschiedenen möglichen Abstände mehrere Abstandhalter von gleicher oder unterschiedlicher Breite bereitzuhalten, und die Abstandhalter auf dem Steg (Befestigungsschraube, Stift, Nagel oder dergleichen) nebeneinander zu stapeln, um mit der Breite des Stapels den gewünschten Abstand der Wandungen zu erreichen.

Nachteilig ist dabei, dass die bekannten stapelbaren Abstandhalter voneinander unabhängig sind, ausserdem sind sie im allgemeinen aus einem Material gefertigt, das ihnen ein leichtes Gleiten aufeinander ermöglicht. Daher verschieben und verdrehen sie sich leicht zueinander, und sie sind deshalb nicht leicht zwischen die Wandungen einzuführen und auf den Steg aufzusetzen. Nach dem Aufsetzen der ersten paar Abstandhalter sitzen diese lose auf dem Steg, so dass sie beim Aufsetzen der nächsten Abstandhalter herunterfallen können. Schliesslich sind beim Aufsetzen des letzten Abstandhalters eines Stapels mehrere Breiten zu probieren, und es passiert dabei leicht, dass einige der noch losen Abstandhalter herausfallen. Solche lose Abstandhalter sind also unhandlich und verursachen beim Personal Aerger und Zeitverlust.

Aus DE-1683374 ist ein stapelbarer Abstandhalter der eingangs angegebenen Art bekannt. Dadurch, dass der Vorsprung eines Abstandhalters nach DE-1683374 in die Ausnehmung eines anderen Abstandhalters nach DE-1683374 steckbar ist, wird die gegenseitige Verschiebung und Verdrehung der Abstandhalter eines zusammengepressten Stapels im wesentlichen vermieden. Die betreffende Steckverbindung ist jedoch lose, d.h., solange ein Stapel von solchen Abstandhaltern nicht zwischen Wandungen geklemmt ist, können sich dessen Abstandhalter verselbständigen. Somit überwinden auch die Abstandhalter nach DE-1683374 die im vorangehenden erwähnten Nachteile der herkömmlichen Abstandhalter nicht, insbesondere sind auch sie nicht leicht zwischen die Wandungen einzuführen und auf den Steg aufzusetzen.

Aufgabe der Erfindung ist es daher, einen stapelbaren Abstandhalter der eingangs genannten Art vorzuschlagen, mit welchem wahlweise ein einzelner Abstandhalter oder ein beliebiger Stapel von aneinander befestigten Abstandhaltern vorbereitet und dann als Ganzes zwischen die Wandungen eingeführt und auf den Steg aufgesetzt werden kann.

Diese Aufgabe wird erfindungsgemäss gelöst durch die im Anspruch 1 angegebene Kombination von Merkmalen. Vorteilhafte Ausbildungen der Erfindung ergeben sich aus den abhängigen Ansprüchen.

Mit Vorteil ermöglicht der erfindungsgemässe Abstandhalter, einen Stapel von Abstandhaltern beliebig zu bilden, zu ändern oder zu zerlegen, indem verschiedene Abstandhalter zum Bilden eines Stapels aufeinandergesteckt oder vom Stapel abgenommen werden können. Erst der fertige Stapel wird zwischen die Wandungen eingeführt und auf den Steg aufgesetzt.

Ein weiterer Vorteil der Erfindung besteht darin, dass der Vorsprung und die Ausnehmung, die das Aufstecken der Abstandhalter aufeinander ermöglichen, die Verwendung des Stapels oder eines einzelnen Abstandhalters nicht verhindern. Durch Pressen des Stapels oder des Abstandhalters rechtwinklig zu den Seitenflächen beispielsweise durch die Wandungen selbst, wenn diese zusammengepresst werden, oder beispielsweise durch einen Hammerschlag auf den Vorsprung, kann dieser in die Ausnehmung zurückgedrückt werden. Das gilt sowohl für einen einzelnen Abstandhalter als für einen Stapel von Abstandhaltern.

Noch ein weiterer Vorteil der Erfindung besteht darin, dass ein Stapel von Abstandhaltern mit einer oder mehreren Rillen oder Nuten versehen werden kann, die je eine Angriffsstelle für ein Werkzeug wie beispielsweise einen Schraubenzieher bilden. Da die Abstandhalter im Stapel fest zueinander positioniert sind und an jeweils einander entsprechenden Stellen mit je einem Teil der Rillen oder Nuten versehen sind, ergeben sich nach dem Stapeln der Abstandhalter Rillen oder Nuten, welche über die gesamte Breite des Stapels verlaufen und somit das Zurechtrücken, Kippen und Herausangeln des Stapels erleichtern.

Weitere Vorteile und Einzelheiten der Erfindung ergeben sich aus der nachstehenden Beschreibung von Ausbildungsbeispielen der Erfindung unter Bezugnahme auf die Zeichnung. Es zeigen:
- Fig. 1: eine Ansicht der einen Seitenfläche eines erfindungsgemässen Abstandhalters;
- Fig. 2: eine Ansicht der anderen Seitenfläche des erfindungsgemässen Abstandhalters;
- Fig. 3: eine Ansicht einer Schmalseite des erfindungsgemässen Abstandhalters, teilweise im Schnitt;
- Fig. 4: eine vergrösserte Ansicht des in Fig. 3 im Schnitt dargestellten Teils des erfindungsgemässen Abstandhalters, bei einem ersten Ausbildungsbeispiel des Vorsprungs und der Ausnehmung; und
- Fig. 5: eine vergrösserte Ansicht des in Fig. 3 im Schnitt dargestellten Teils des erfindungsgemässen Abstandhalters, bei einem zweiten Ausbildungsbeispiel des Vorsprungs und der Ausnehmung.

Der erfindungsgemässe Abstandhalter weist einen Abstandhalterkörper 1 mit im wesentlichen ebenen und einander parallelen Seitenflächen 2 und 3 auf. Diese Seitenflächen 2 und 3 definieren durch ihren Abstand voneinander die Breite des Abstandhalterkörpers 1 auf dessen Schmalseite 4.

Die Seitenflächen 2 und 3 des Abstandhalterkörpers 1 und somit dessen Querschnitt parallel dazu sind im wesentlichen U-förmig ausgebildet und weisen Schenkel 5 und 6 und einen Mittelteil 7 auf. Dadurch kann der Abstandhalter auf einen Steg aufgesetzt werden, indem der Steg zwischen die Schenkel 5 und 6 eingeführt wird, bis er mit dem Mittelteil 7 in Kontakt kommt. Die Schenkel 5 und 6 sind im Verhältnis zum Mittelteil 7 so bemessen, dass sich der Schwerpunkt des Abstandhalterkörpers 1 zwischen den Schenkeln 5 und 6 im Abstand vom Mittelteil 7 befindet. Das Gleichgewicht eines auf einen Steg rittlings aufgesetzten Abstandhalters ist daher stabil.

Auf der Seitenfläche 2 ist der Abstandhalterkörper 1 mit zwei im wesentlichen zylindrischen Vorsprüngen 8 und 9 versehen. Auf der Seitenfläche 3 ist der Abstandhalterkörper 1 mit zwei im wesentlichen zylindrischen Ausnehmungen 10 und 11 versehen. Die Vorsprünge 8 und 9 passen zu den Ausnehmungen 10 und 11 wie Stecker und Buchse, weshalb die Seitenfläche 2 als steckerseitig und die Seitenfläche 3 als buchsenseitig bezeichnet wird.

Selbstverständlich können die Vorsprünge 8 und 9 des Abstandhalterkörpers 1 nicht ohne weiteres in die Ausnehmungen 10 und 11 desselben Abstandhalterkörpers 1 gesteckt werden. Darauf wird weiter unten eingegangen, während hier folgendes zu verstehen ist:
(a) Bei einem einzelnen Abstandhalter sind einerseits der Vorsprung 8 und die Ausnehmung 10, andererseits der Vorsprung 9 und die Ausnehmung 11 an jeweils gegenüberliegenden Stellen der Seitenflächen 2 und 3 angeordnet.
(b) Wenn man zwei Abstandhalter betrachtet, bilden einerseits der Vorsprung 8 des einen Abstandhalters und die Ausnehmung 10 des anderen Abstandhalters, andererseits der Vorsprung 9 des einen Abstandhalters und die Ausnehmung 11 des anderen Abstandhalters jeweils zu zweien eine Paarung, die das Einstecken der Vorsprünge in die Ausnehmungen ermöglicht. Durch dieses Einstecken wird gesamthaft der eine Abstandhalter auf den anderen Abstandhalter aufgesteckt, so dass die Abstandhalter aufeinander gestapelt werden.

Verwendet man nun einen solchen Stapel oder einen einzelnen Abstandhalter ohne weitere Vorkehrung, so ragen die Vorsprünge 8 und 9 über die Seitenfläche 2 vor, was den erreichten Abstand zwischen den Wandungen ändert. Daher ist vorgesehen, dass (a) der Vorsprung 8 in die Ausnehmung 10 und der Vorsprung 9 in die Ausnehmung 11 desselben Abstandhalters einpressbar ist, so dass die Vorsprünge 8 und 9 nach dem Einpressen nicht mehr über die Seitenfläche 2 vorragen, und dass (b) die Mantellinien der Ausnehmungen 10 und 11 länger sind als zweimal die Mantellinien der Vorsprünge 8 und 9, so dass die Vorsprünge 8 und 9 nicht daran gehindert werden, nach dem Einpressen vollständig in den Ausnehmungen 10 und 11 aufgenommen zu sein.

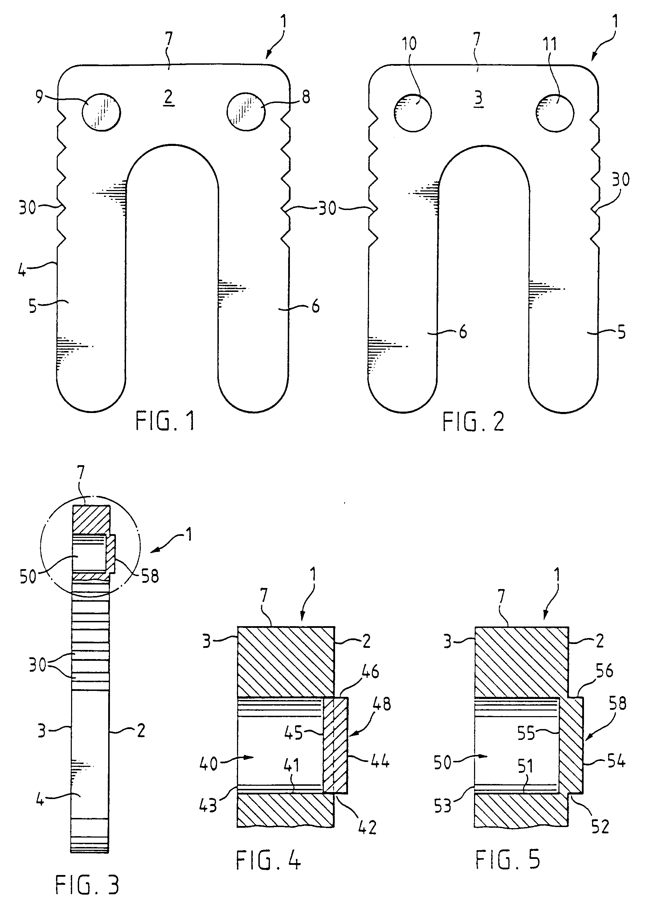

In einem ersten Ausbildungsbeispiel (Fig. 4) wird folgenderweise gewährleistet, dass jeder Vorsprung in die entsprechende Ausnehmung desselben oder eines anderen Abstandhalters einpressbar ist.

Der Vorsprung ist als selbständiger zylindrischer Vorsprungkörper 48 ausgebildet. Steckerseitig weist der Vorsprungkörper 48 in einer Ebene, die den Seitenflächen 2 und 3 parallel ist, eine Endfläche 44 auf. Buchsenseitig weist der Vorsprungkörper 48 in einer Ebene, die den Seitenflächen 2 und 3 parallel ist, eine Basisfläche 45 auf. Der jeweilige Umfang der Endfläche 44 und der Basisfläche 45 ist vom Schnitt der jeweiligen Ebene mit einer Mantelfläche 46 des Vorsprungkörpers 48 definiert und daher kreisförmig.

Die Ausnehmung 40 ist kreiszylindrisch und von der einen Seitenfläche 2 zur anderen Seitenfläche 3 durchgehend ausgebildet. Steckerseitig weist die Ausnehmung 40 in der Ebene der Seitenfläche 2 eine Oeffnung 42 auf. Buchsenseitig weist die Ausnehmung 40 in der Ebene der Seitenfläche 3 eine Oeffnung 43 auf. Der jeweilige Umfang der Oeffnungen 42 und 43 ist vom Schnitt der jeweiligen Seitenfläche 2 bzw. 3 mit einer Mantelfläche 41 der Ausnehmung 40 definiert und daher kreisförmig.

Ein der Basisfläche 45 benachbarter Teil des Vorsprungkörpers 48 ist innerhalb der Ausnehmung 40 angeordnet, während der übrige Teil des Vorsprungkörpers 48 in die Ausnehmung einpressbar ist. Um dabei ungewollte Bewegungen des Vorsprungkörpers 48 relativ zur Ausnehmung 40 zu verhindern, ist vorgesehen, dass die Mantelfläche 46 des Vorsprungkörpers 48 und die Mantelfläche 41 der Ausnehmung 40 zusammen eine Presspassung bilden. Somit ist der Durchmesser des Vorsprungkörpers 48 entsprechend einem Uebermass der Presspassung grösser als der Durchmesser der Ausnehmung 40, d.h. der Umfang der Endfläche 44 des Vorsprungkörpers 48 ist entsprechend dem Uebermass der Presspassung grösser als der Umfang der buchsenseitigen Oeffnung 43 der Ausnehmung 40.

Das Uebermass der Presspassung beträgt beispielsweise etwa 0,01 mm, wenn das Material des Abstandhalters beispielsweise ein zäher Kunststoff oder noch ein Metall wie beispielsweise Aluminium ist. Als Kunststoff empfiehlt sich bei der Verwendung im Bauwesen ein solcher, der witterungsbeständig und bis etwa 90°C wärmebeständig ist, beispielsweise "Luran S" (ein Produkt der BASF).

Aufgrund des elastischen und/oder plastischen Nachgebens des Materials des Abstandhalters werden der Umfang der Basisfläche 45 und der steckerseitigen Oeffnung 42 der Ausnehmung 40 einander im wesentlichen einander gleich, sobald der der Basisfläche 45 benachbarte Teil des Vorsprungkörpers 48 gegen das Uebermass der Presspassung in die Ausnehmung 40 eingepresst worden ist.

Ebenfalls aufgrund des elastischen und/oder plastischen Nachgebens des Materials des Abstandhalters ist auch noch der übrige Teil des Vorsprungkörpers 48 in die Ausnehmung 40 gegen das Uebermass der Presspassung einpressbar, beispielsweise durch Pressen des Abstandhalters rechtwinklig zu den Seitenflächen 2 und 3 oder durch einen Hammerschlag auf den Vorsprungkörper 48. Damit wird der Abstandhalter zu einem flachen Körper ohne Vorsprung gemacht, er kann dann einzeln als Abstandhalter verwendet werden.

Wenn man nun zwei Abstandhalter betrachtet, bilden auch der Vorsprungkörper 48 des einen Abstandhalters und die Ausnehmung 40 eines anderen Abstandhalters zusammen eine Presspassung mit dem gleichen Uebermass. Aufgrund des elastischen und/oder plastischen Nachgebens des Materials des Abstandhalters ist daher der Vorsprungkörper 48 des einen Abstandhalters in die Ausnehmung 40 des anderen Abstandhalters gegen das Uebermass steckbar. So können die Abstandhalter zu einem Stapel zusammengesteckt werden. Da die Tiefe der Ausnehmung 40 länger ist als zweimal die Länge des Vorsprungkörper 48, wird der am Ende eines Stapels hervorstehende Vorsprungkörper 48 nicht daran gehindert, vollständig in die Ausnehmung 40 aufgenommen zu werden. Damit wird auch der Stapel wie im Falle des einzelnen Abstandhalters zu einem Körper ohne Vorsprung gemacht, der dann gesamthaft als Abstandhalter verwendet werden kann.

In einem zweiten Ausbildungsbeispiel (Fig. 5) wird folgenderweise gewährleistet, dass jeder Vorsprung in die entsprechende Ausnehmung desselben oder eines anderen Abstandhalters einpressbar ist.

Der Vorsprung 58 ist integral mit dem Abstandhalterkörper 1 und zylindrisch ausgebildet. Steckerseitig weist der Vorsprungkörper 58 in einer Ebene, die den Seitenflächen 2 und 3 parallel ist, eine Endfläche 54 auf. Buchsenseitig weist der Vorsprung 58 in der Ebene der steckerseitigen Seitenflächen 2 einen Basisquerschnitt 52 auf. Der jeweilige Umfang der Endfläche 54 und des Basisquerschnitts 52 ist vom Schnitt der jeweiligen Ebene mit einer Mantelfläche 56 des Vorsprungs 58 definiert und daher kreisförmig.

Die Ausnehmung 50 ist kreiszylindrisch und als blindes Loch ausgebildet. Buchsenseitig weist die Ausnehmung 50 in der Ebene der Seitenfläche 3 eine Oeffnung 53 auf. Steckerseitig weist die Ausnehmung 50 in einer von den Seitenflächen 2 und 3 beabstandeten, dazwischen liegenden und dazu parallelen Bodenebene eine Bodenfläche 55 auf. Der Umfang der Oeffnung 53 ist vom Schnitt der Seitenfläche 2, der Umfang der Bodenfläche 55 vom Schnitt der Bodenebene mit einer Mantelfläche 51 der Ausnehmung 50 definiert. Der Umfang der Bodenfläche 55 der Ausnehmung 50 und der Umfang des Basisquerschnitts 52 des Vorsprungs 58 sind Kreise, die im wesentlichen in gleichbleibendem Abstand voneinander verlaufen.

Im Hinblick auf die Bildung der bereits beschriebenen Presspassung zwischen dem Vorsprung 58 des einen Abstandhalters und der Ausnehmung 50 eines anderen Abstandhalters ist der Umfang des Basisquerschnitts 52 des Vorsprungs 58 entsprechend dem Uebermass der Presspassung grösser als der Umfang der Bodenfläche 55 der Ausnehmung 50. Wie vorangehend beschrieben, ist auch hier der Vorsprung 58 des einen Abstandhalters in die Ausnehmung 50 des anderen Abstandhalters gegen Uebermass steckbar.

Im Hinblick auf die Bildung der bereits beschriebenen Presspassung zwischen dem Vorsprung 58 des einen Abstandhalters und der Ausnehmung 50 desselben Abstandhalters ist der Abstand zwischen den Ebenen der Bodenfläche 55 der Ausnehmung 50 und des Basisquerschnitts 52 des Vorsprungs 58 so bemessen, dass eine Regelfläche, die auf den Umfang der Bodenfläche 55 und auf den Umfang des Basisquerschnitts 52 gestützt ist, eine Sollbruchstelle des Abstandhalterkörpers 1 für das Einpressen des Vorsprungs 58 in die Ausnehmung 50 bildet. Die Bemessung des Abstands zwischen den Ebenen der Bodenfläche 55 und des Basisquerschnitts 52 ist abhängig von der Grösse des jeweiligen Umfangs sowie von der Zähigkeit des Materials des Abstandhalterkörpers und kann vom Fachmann zumindest experimentell leicht ermittelt werden. Wie vorangehend beschrieben, ist auch hier der Vorsprung 58 in die Ausnehmung 50 gegen die Scherung des Abstandhalterkörpers 1 an der Sollbruchstelle, also zwischen den Mantelflächen 51 und 56, sowie gegen das Uebermass einpressbar.

Auch hier ist die Tiefe der Ausnehmung 50 länger als zweimal die Länge des Vorsprungs 58, so dass der am Ende Vorsprung 58 nicht daran gehindert wird, vollständig in die Ausnehmung 50 aufgenommen zu werden. Damit kann der Abstandhalter im Falle eines Stapels wie auch im Falle eines einzelnen Abstandhalters zu einem Körper ohne Vorsprung gemacht werden, der dann gesamthaft als Abstandhalter verwendet werden kann.

Die Einführung des Vorsprungkörpers 48 bzw. des Vorsprungs 58 des einen Abstandhalters in die Ausnehmung 40 bzw. 50 des anderen Abstandhalters gegen das Uebermass wird erleichtert, wenn vorgesehen ist, dass sich der Vorsprungkörper 48 bzw. der Vorsprung 58 in Nähe seiner Endfläche 44 bzw. 54 zu dieser hin beispielsweise konisch verjüngt, d.h. zuspitzt, und/oder dass sich die Ausnehmung 40 bzw. 50 in Nähe ihrer Oeffnung 43 bzw. 53 zu dieser hin beispielsweise konisch, d.h. trichterförmig erweitert. Diese Verjüngung und/oder Erweiterung hat den Zweck, im Bereich der Endfläche 44 bzw. 54 und der Oeffnung 43 bzw. 53 das Uebermass in ein etwa gleich grosses Spiel umzukehren. Sowohl das Uebermass als auch das Spiel sind gegenüber den anderen Dimensionen des Abstandhalters so gering, dass sie in den Figuren nicht sichtbar sind.

Um die Handhabung der Abstandhalter bzw. der Stapel zu erleichtern, wenn sie zwischen zwei Wandungen auf einem Steg aufgesetzt und nur für ein Werkzeug wie beispielsweise einen Schraubenzieher zugänglich sind, sind auf der Schmalseite 4 des Abstandhalterkörpers 1, in einem aussenseitigen Bereich eines der Schenkel 5 und 6 und/oder des Mittelteils 7, eine oder mehrere Rillen oder Nuten 30 vorgesehen, die am Abstandhalterkörper 1 im wesentlichen rechtwinklig zu den Seitenflächen 2 und 3 verlaufen. Im dargestellten Ausbildungsbeispiel sind diese Rillen oder Nuten 30 etwa dreieckige Vertiefungen, sie könnten aber auch einen anderen Querschnitt aufweisen und beispielsweise halbkreisförmig, trapezförmig, viereckig und dergleichen sein.

Da sich die Rillen oder Nuten 30 über die ganze Breite des Abstandhalterkörpers 1 bzw. seiner Schmalseite 4 erstrecken, liegen die einzelnen Rillen oder Nuten 30 in Verlängerung voneinander, wenn die Abstandhalter gestapelt sind, so dass sie auch über die gesamte Breite des Stapels verlaufen.

In den beschriebenen Ausbildungsbeispielen sind am Abstandhalter jeweils zwei Vorsprünge 8 und 9 und Ausnehmungen 10 und 11 vorgesehen. Es könnten aber auch nur ein Vorsprung und eine Ausnehmung, oder dann mehr als je zwei Vorsprünge 8 und 9 und Ausnehmungen 10 und 11 vorgesehen sein.

Die Vorsprünge 8 und 9 und die Ausnehmungen 10 und 11 weisen in den beschriebenen Ausbildungsbeispielen einen kreisförmigen Querschnitt auf. Im Rahmen der Erfindung könnte deren Querschnitt aber auch von irgendeiner anderen Form sein, beispielsweise dreieckig, viereckig, sechseckig und dergleichen. Mit "zylindrisch" ist also im vorliegenden nicht nur "kreiszylindrisch" im üblichen Sinne zu verstehen, sondern generell die mathematisch definierte Zylinderform mit einer von zwei Ebenen begrenzten Mantelfläche, die als Regelfläche mit einander parallelen Mantellinien ausgebildet ist.

## Patentansprüche

1. Stapelbarer Abstandhalter zur Bestimmung des Abstands zwischen zueinander beanspruchten und verschiebbaren Wandungen, wobei
- der Abstandhalter einen Abstandhalterkörper (1) mit im wesentlichen ebenen und einander parallelen Seitenflächen (2,3) und einem parallel zu den Seitenflächen im wesentlichen U-förmigen Querschnitt aufweist,
- die Seitenflächen (2,3) durch ihren Abstand voneinander eine Breite des Abstandhalterkörpers (1) definieren,
- der Abstandhalterkörper (1) an gegenüberliegenden Stellen seiner Seitenflächen (2,3) steckerseitig mit einem Vorsprung (8,9) und buchsenseitig mit einer im wesentlichen zylindrischen Ausnehmung (10,11) versehen ist, wobei orthogonal zu den Seitenflächen (2,3) die Tiefe der Ausnehmung grösser ist als die Höhe des Vorsprungs,
- und von zwei Abstandhaltern der Vorsprung (8,9) des einen Abstandhalters und die Ausnehmung (10,11) eines anderen Abstandhalters zusammen eine Paarung bilden, so dass der Vorsprung des einen Abstandhalters in die Ausnehmung des anderen Abstandhalters steckbar ist,
**dadurch gekennzeichnet, dass**
- der Abstandhalter zum Aufsetzen auf einen zwischen zwei Wandungen angeordneten Steg bestimmt ist,
- der steckerseitige Vorsprung (8,9) im wesentlichen zylindrisch ausgebildet ist, wobei die Mantellinien der Ausnehmung länger sind als zweimal die Mantellinien des Vorsprungs, und
- der Vorsprung (8,9) eines Abstandhalters in die entsprechende Ausnehmung (10,11) des anderen Abstandhalters einpressbar ist.

2. Abstandhalter nach Anspruch 1, dadurch gekennzeichnet, dass
- der Vorsprung als selbständiger Vorsprungkörper (48) ausgebildet ist,
- von zwei Abstandhaltern der Vorsprungkörper (48) des einen Abstandhalters und die Ausnehmung (40) eines anderen Abstandhalters zusammen eine Presspassung bilden, so dass der Vorsprungkörper (48) des einen Abstandhalters in die Ausnehmung (40) des anderen Abstandhalters gegen Uebermass steckbar ist, und
- Vorsprungkörper (48) und Ausnehmung (40) desselben Abstandhalters zusammen eine Presspassung bilden, so dass der Vorsprungkörper (48) in die Ausnehmung 40) gegen Uebermass einpressbar ist.

3. Abstandhalter nach Anspruch 2, dadurch gekennzeichnet, dass
- die Ausnehmung (40) von einer Seitenfläche zur anderen (2,3) durchgehend ausgebildet ist und steckerseitig sowie buchsenseitig in der jeweiligen Ebene der Seitenfläche (2,3) je eine Oeffnung (42,43) aufweist, deren Umfang vom Schnitt der jeweiligen Seitenfläche (2,3) mit der Mantelfläche (41) der Ausnehmung (40) definiert ist,
- der Vorsprungkörper (48) in je einer den Seitenflächen (2,3) des Abstandhalterkörpers (1) parallelen Ebene steckerseitig eine Endfläche (44) und buchsenseitig eine Basisfläche (45) aufweist, deren Umfang vom Schnitt der jeweiligen Ebene mit der Mantelfläche (46) des Vorsprungkörpers (48) definiert ist,
- die Mantelflächen (41,46) der Ausnehmung (40) und des Vorsprungkörpers (48) zusammen die Presspassung bilden, wobei der Umfang der Endfläche (44) des Vorsprungkörpers (48) entsprechend dem Uebermass der Presspassung grösser ist als der Umfang der buchsenseitigen Oeffnung (43) der Ausnehmung (40), und
- ein der Basisfläche (45) benachbarter Teil des Vorsprungkörpers (48) innerhalb der Ausnehmung (40) angeordnet ist, während der übrige Teil des Vorsprungkörpers (48) in die Ausnehmung (40) gegen das Uebermass der Presspassung einpressbar ist.

4. Abstandhalter nach Anspruch 1, dadurch gekennzeichnet, dass
- der Vorsprung (58) integral mit dem Abstandhalterkörper (1) ausgebildet ist,
- von zwei Abstandhaltern der Vorsprung (58) des einen Abstandhalters und die Ausnehmung (50) eines anderen Abstandhalters zusammen eine Presspassung bilden, so dass der Vorsprung (58) des einen Abstandhalters in die Ausnehmung (50) des anderen Abstandhalters gegen Uebermass steckbar ist, und
- Vorsprung (58) und Ausnehmung (50) desselben Abstandhalters zusammen eine Presspassung bilden, so dass der Vorsprung (58) in die Ausnehmung (50) gegen Scherung des Abstandhalterkörpers (1) zwischen den Mantelflächen (51,56) des Vorsprungs (58) und der Ausnehmung (50) sowie gegen Uebermass einpressbar ist.

5. Abstandhalter nach Anspruch 4, dadurch gekennzeichnet, dass
- die als blindes Loch ausgebildete Ausnehmung (50) buchsenseitig in der Ebene der Seitenfläche (3) eine Oeffnung (53) aufweist, deren Umfang vom Schnitt dieser Seitenfläche (3) mit der Mantelfläche (51) der Ausnehmung (50) definiert ist, und in einer von den Seitenflächen (2,3) beabstandeten, dazwischen liegenden und dazu parallelen Bodenebene eine Bodenfläche (55) aufweist, deren Umfang vom Schnitt der die Bodenfläche (55) enthaltenden Bodenebene mit der Mantelfläche (51) der Ausnehmung (50) definiert ist,
- der Vorsprung (58) steckerseitig in einer den Seitenflächen (2,3) des Abstandhalterkörpers parallelen Endebene eine Endfläche (54) aufweist, deren Umfang vom Schnitt der die Endfläche (54) enthaltenden Endebene mit der Mantelfläche (56) des Vorsprungkörpers (58) definiert ist, und in der Ebene der steckerseitigen Seitenfläche (2) einen Basisquerschnitt (52) aufweist, dessen Umfang vom Schnitt dieser Seitenfläche (2) mit der Mantelfläche (56) des Vorsprungkörpers (58) definiert ist,
- der Umfang der Bodenfläche (55) der Ausnehmung (50) und der Umfang des Basisquerschnitts (52) des Vorsprungs (58) im wesentlichen in gleichbleibendem Abstand voneinander verlaufen, wobei der Umfang des Basisquerschnitts (52) des Vorsprungs (58) entsprechend dem Uebermass der Presspassung grösser ist als der Umfang der Bodenfläche (55) der Ausnehmung (50), und
- der Abstand zwischen den Ebenen der Bodenfläche (55) der Ausnehmung (50) und des Basisquerschnitts (52) des Vorsprungs (58) in Abhängigkeit von der Grösse des jeweiligen Umfangs sowie von der Zähigkeit des Materials des Abstandhalterkörpers (1) so bemessen ist, dass eine Regelfläche, die auf den einen und den anderen Umfang gestützt ist, eine Sollbruchstelle des Abstandhalterkörpers (1) für das Einpressen des Vorsprungs (58) in die Ausnehmung (50) bildet.

6. Abstandhalter nach Anspruch 1, dadurch gekennzeichnet, dass auf einer Schmalseite (4) des Abstandhalterkörpers (1) in einem aussenseitigen Bereich eines Schenkels (5,6) oder Mittelteils (7) der U-Form mindestens eine im wesentlichen rechtwinklig zu den Seitenflächen (2,3) verlaufende Rille oder Nut (30) vorgesehen ist.

7. Abstandhalter nach Anspruch 1, dadurch gekennzeichnet, dass der Vorsprung (8,9,48,58) und die Ausnehmung (10,11,40,50) im wesentlichen kreiszylindrisch sind.

8. Abstandhalter nach Anspruch 7, dadurch gekennzeichnet, dass sich der Vorsprung (48,58) in Nähe seiner Endfläche (44,54) zu dieser hin verjüngt.

9. Abstandhalter nach Anspruch 7, dadurch gekennzeichnet, dass sich die Ausnehmung (40,50) in Nähe ihrer Oeffnung (43,53) zu dieser hin erweitert.

## Claims

1. Stackable spacer for determining the spacing between walls which are stressed and can be displaced relative to each other, in which:-
- the spacer has a spacer body (1) with substantially planar and parallel side faces (2, 3) and a cross section that is substantially U-shaped parallel to the side faces,
- the side faces (2, 3) by means of their spacing from each other define a width of the spacer body (1),
- the spacer body (1), at opposing points of its side faces (2, 3), on a plug side is provided with a projection (8, 9) and on a socket side is provided with a substantially cylindrical recess (10, 11), with, orthogonally to the side faces (2, 3), the depth of the recess being greater that the height of the projection,
- and, in respect of two spacers, the projection (8, 9) of the one spacer and the recess (10, 11) of another spacer together form a pairing so that the projection of the one spacer can be plugged into the recess of the other spacer,
characterised in that
- the spacer is intended to be set upon a web which is arranged between two walls,
- the projection (8, 9) on the plug side is formed so as to be substantially cylindrical, with the surface lines of the recess being longer than twice the surface lines of the projection, and
- it is possible to press the projection (8, 9) of one spacer into the corresponding recess (10,11) of the other spacer.

2. Spacer according to claim 1, characterised in that
- the projection is formed as an independent projection body (48),
- in respect of two spacers, the projection body (48) of the one spacer and the recess (40) of the other spacer together form a press fit so that the projection body (48) of the one spacer can be plugged into the recess (40) of the other spacer against interference, and
- projection body (48) and recess (40) of the same spacer together form a press fit so that the projection body (48) can be pressed into the recess (40) against interference.

3. Spacer according to claim 2, characterised in that
- the recess (40) is formed by one side face passing through to the other (2, 3) and on the plug side and also on the socket side in the respective plane of the side face (2, 3) has a respective opening (42, 43), the periphery of which is defined by the cut of the respective side face (2, 3) with the lateral surface (41) of the recess (40),
- the projection body (48) in a respective plane parallel to the side faces (2, 3) of the spacer body (1) has on the plug side an end face (44) and on the socket side a base face (45), the periphery of which is defined by the cut of the respective plane with the lateral surface (46) of the projection body (48),
- the lateral surfaces (41, 46) of the recess (40) and of the projection body (48) together form the press fit, with the periphery of the end face (44) of the projection body (48) being greater, in accordance with the interference of the press fit, than the periphery of the opening (43) of the recess (40) on the socket side, and
- a portion of the projection body (48) that is adjacent to the base face (45) is arranged within the recess (40), whilst the rest of the projection body (48) can be pressed into the recess (40) against the interference of the press fit.

4. Spacer according to claim 1, characterised in that
- the projection (58) is formed so as to be integral with the spacer body (1),
- in respect of two spacers, the projection (58) of the one spacer and the recess (50) of the other spacer together form a press fit so that the projection (58) of the one spacer can be plugged into the recess (50) of the other spacer against interference, and
- projection (58) and recess (50) of the same spacer together form a press fit so that the projection (58) can be pressed into the recess (50) against shearing action of the spacer body (1) between the lateral surfaces (51, 56) of the projection (58) and the recess (50) and also against interference.

5. Spacer according to claim 4, characterised in that
- the recess (50), which is formed as a blind hole, has on the socket side in the plane of the side face (3) an opening (53), the periphery of which is defined by the cut of this side face (3) with the lateral surface (51) of the recess (50), and in a base plane, which is at a distance from the side faces (2, 3), lies between them and parallel thereto, has a base face (55), the periphery of which is defined by the cut of the base plane containing the base face (55) with the lateral surface (51) of the recess (50),
- the projection (58) on the plug side in an end plane, which is parallel to the side faces (2, 3) of the spacer body, has an end face (54), the periphery of which is defined by the cut of the end plane containing the end face (54) with the lateral surface (56) of the projection body (58), and in the plane of the side face (2) on the plug side has a base cross section (52), the periphery of which is defined by the cut of this side face (2) with the lateral surface (56) of the projection body (58),
- the periphery of the base face (55) of the recess (50) and the periphery of the base cross section (52) of the projection (58) extend substantially with uniform spacing from each other, with the periphery of the base cross section (52) of the projection (58) being greater, in accordance with the interference of the press fit, than the periphery of the base face (55) of the recess (50), and
- the spacing between the planes of the base face (55) of the recess (50) and the base cross section (52) of the projection (58) is dimensioned as a function of the size of the respective periphery and also of the toughness of the material of the spacer body (1) so that a control area, which is based on the one and the other periphery, forms a predetermined breaking point of the spacer body (1) for pressing the projection (58) into the recess (50).

6. Spacer according to claim 1, characterised in that at least one channel or groove (30) extending substantially at right angles to the side faces (2, 3) is provided on one narrow side (4) of the spacer body (1) in an outside region of a leg (5, 6) or central portion (7) of the U-shape.

7. Spacer according to claim 1, characterised in that the projection (8, 9, 48, 58) and the recess (10, 11, 40, 50) are substantially circularly cylindrical.

8. Spacer according to claim 7, characterised in that the projection (48, 58) close to its end face (44, 54) tapers towards the latter.

9. Spacer according to claim 7, characterised in that the recess (40, 50) close to its opening (43, 53) is extended towards the latter.

## Revendications

1. Ecarteur empilable pour déterminer l'écartement entre deux parois mutuellement sollicitées et mutuellement déplaçables, dans lequel
l'écarteur présente un corps d'écarteur (1) comprenant des surfaces latérales (2, 3) essentiellement planes et mutuellement parallèles, ainsi qu'une section transversale essentiellement en U parallèle aux surfaces latérales,
- les surfaces latérales (2, 3) définissent, par leur écartement mutuel, une largeur du corps d'écarteur (1),
- le corps d'écarteur (1) est muni, à des endroits opposés de ses surfaces latérales (2, 3), côté connecteur d'une saillie (8, 9) et côté douille d'un évidement (10, 11) essentiellement cylindrique, la profondeur de l'évidement, en position orthogonale par rapport aux surfaces latérales (2, 3), étant supérieure à la hauteur de la saillie,
- et, en prenant en compte deux écarteurs, la saillie (8, 9) du premier écarteur et l'évidement (10, 11) de l'autre écarteur forment ensemble une paire, si bien que la saillie du premier écarteur peut venir s'enficher dans l'évidement de l'autre écarteur,
caractérisé en ce que
l'écarteur est destiné à venir se disposer sur une tige disposée entre deux parois,
- la saillie (8, 9), côté connecteur, est réalisée de manière essentiellement cylindrique, les génératrices de l'évidement étant plus longues que le double des génératrices de la saillie, et
- la saillie (8, 9) d'un premier écarteur peut être introduite par pression dans l'évidement correspondant (10, 11) de l'autre écarteur.

2. Ecarteur selon la revendication 1, caractérisé en ce que
- la saillie est réalisée sous forme d'un corps de saillie indépendant (48),
- en prenant en compte deux écarteurs, le corps de saillie (48) du premier écarteur et l'évidement (40) de l'autre écarteur forment ensemble un ajustage serré, si bien que le corps de saillie (48) du premier écarteur peut venir s'enficher à l'encontre de la surmesure dans l'évidement (40) de l'autre écarteur, et
- le corps de saillie (48) et l'évidement (40) du même écarteur forment ensemble un ajustage serré, si bien que le corps de saillie (48) peut s'introduire par pression dans l'évidement (40) à l'encontre de la surmesure.

3. Ecarteur selon la revendication 2, caractérisé en ce que
- l'évidement (40) est réalisé en continu d'une surface latérale à l'autre (2, 3) et présente, côté connecteur, de même que côté douille, chaque fois une ouverture (42, 43) dans le plan respectif de la surface latérale (2, 3), dont l'étendue est définie par la coupure de la surface latérale respective (2, 3) avec la surface latérale (41) de l'évidement (40),
- le corps de saillie (48) présente, dans chacun des plans parallèles aux surfaces latérales (2, 3) du corps d'écarteur (1), côté connecteur, une surface terminale (44) et, côté douille, une surface de base (45) dont l'étendue est définie par la coupure du plan respectif avec la surface latérale (46) du corps de saillie (48),
- les surfaces latérales (41, 46) de l'évidement (40) et du corps de saillie (48) forment ensemble un ajustage serré, l'étendue de la surface terminale (44) du corps de saillie (48) étant supérieure, de manière correspondante à la surmesure de l'ajustage serré, à l'étendue de l'ouverture (43) de l'évidement (40) côté douille, et
- une partie du corps de saillie (48) voisine de la surface de base (45) est disposée à l'intérieur de l'évidement (40), tandis que la partie restante du corps de saillie (48) peut s'introduire par pression dans l'évidement (40) à l'encontre de la surmesure de l'ajustage serré.

4. Ecarteur selon la revendication 1, caractérisé en ce que
- la saillie (58) est réalisée de manière solidaire au corps d'écarteur (1),
- en prenant en compte deux écarteurs, la saillie (58) du premier écarteur et l'évidement (50) de l'autre écarteur forment ensemble un ajustage serré, si bien que la saillie (58) du premier écarteur peut venir s'enficher à l'encontre de la surmesure dans l'évidement (50) de l'autre écarteur, et
- la saillie (58) et l'évidement (50) du même écarteur forment ensemble un ajustage serré, si bien que la saillie (58) peut s'introduire par pression dans l'évidement (50) à l'encontre du cisaillement du corps d'écarteur (1) entre les surfaces latérales (51, 56) de la saillie (58) et l'évidement (50), ainsi qu'à l'encontre de la surmesure.

5. Ecarteur selon la revendication 4, caractérisé en ce que
- l'évidement (50) réalisé en forme de trou borgne présente, côté douille, dans le plan de la surface latérale (3), une ouverture (53) dont l'étendue est définie par la coupure de cette surface latérale (3) avec la surface latérale (51) de l'évidement (50) et présente, dans un plan inférieur écarté des surfaces latérales (2, 3), disposé entre elles et parallèle à ces dernières, une surface inférieure (55) dont l'étendue est définie par la coupure du plan inférieur contenant la surface inférieure (55) avec la surface latérale (51) de l'évidement (50),
- la saillie (58) présente, côté connecteur, dans un plan terminal parallèle aux surfaces latérales (2, 3) du corps d'écarteur, une surface terminale (54) dont l'étendue est définie par la coupure du plan terminal contenant la surface terminale (54) avec la surface latérale (56) du corps de saillie (58) et présente, dans le plan de la surface latérale (2) côté connecteur, une section transversale de base (52) dont l'étendue est définie par la coupure de cette surface latérale (2) avec la surface latérale (56) du corps de saillie (58),
- l'étendue de la surface inférieure (55) de l'évidement (50) et l'étendue de la section transversale de base (52) de la saillie (58) présentent essentiellement un écart mutuel constant, l'étendue de la section transversale de base (52) de la saillie (58) étant supérieure, de manière correspondante à la surmesure de l'ajustage serré, à l'étendue de la surface inférieure (55) de l'évidement (50), et
- l'écartement entre les plans de la surface inférieure (55) de l'évidement (50) et de la section transversale de base (52) de la saillie (58) est mesuré en fonction de l'ampleur de l'étendue respective, ainsi que de la résilience de la matière du corps d'écarteur (1) de telle sorte qu'une surface réglée, qui s'appuie sur l'une et l'autre étendue, forme un point du corps d'écarteur (1) destiné à la rupture pour l'introduction de la saillie (58) par pression dans l'évidement (50).

6. Ecarteur selon la revendication 1, caractérisé en ce que, sur le petit côté (4) du corps d'écarteur (1), dans une zone externe d'une branche (5, 6) ou d'une partie médiane (7) de la forme en U, on prévoit au moins une rigole ou une rainure (30) s'étendant essentiellement à angle droit par rapport aux surfaces latérales (2, 3).

7. Ecarteur selon la revendication 1, caractérisé en ce que la saillie (8, 9, 48, 58) et l'évidement (10, 11, 40, 50) sont essentiellement de forme cylindrique circulaire.

8. Ecarteur selon la revendication 7, caractérisé en ce que la saillie (48, 58) se rétrécit à proximité de sa surface terminale (44, 54) en direction de cette dernière.

9. Ecarteur selon la revendication 7, caractérisé en ce que l'évidement (40, 50) s'élargit à proximité de son ouverture (43, 53) en direction de cette dernière.
